# EUROPÄISCHE PATENTSCHRIFT

(11) **EP 2 633 216 B1**
(45) Veröffentlichungstag und Bekanntmachung des Hinweises auf die Patenterteilung: **17.06.2015**
(21) Anmeldenummer: 11748384.2
(22) Anmeldetag: 24.08.2011
(51) Int. Cl.: F16L 3/11, F16L 59/135

(54) **LEITUNGSABHÄNGEVORRICHTUNG MIT LASTVERTEILUNGSBLECH**
LINE HANGING DEVICE WITH A LOAD DISTRIBUTION PLATE
DISPOSITIF D'ATTACHE DE CONDUITE DOTÉ D'UNE TÔLE DE RÉPARTITION DE CHARGES

(30) Priorität: 25.10.2010 DE 102010042860
(43) Veröffentlichungstag der Anmeldung: 04.09.2013
(73) Patentinhaber: HILTI Aktiengesellschaft, 9494 Schaan (LI)
(72) Erfinder: WIEDNER, Christoph, A-6800 Feldkirch (AT); NUTZMANN, Marc, 88131 Lindau (DE); LIPPUNER, Ralph, CH-9470 Buchs (CH); BRAGAGNA, Elio, A-6822 Düns (AT)
(74) Vertreter: Hilti Aktiengesellschaft Corporate Intellectual Property
(86) Internationale Anmeldenummer: PCT/EP2011/064522
(87) Internationale Veröffentlichungsnummer: WO 2012/055601

(56) Entgegenhaltungen:
- DE-A1-102009 045 484
- US-A- 3 653 618
- US-A1- 2008 203 239
- US-B1- 6 224 025
- US-B1- 6 283 158
- US-B1- 6 959 898

## Beschreibung

Die Erfindung betrifft eine Leitungsabhängevorrichtung mit einem Lastverteilungsblech, insbesondere zum Abhängen eines Rohres von einer Decke, gemäss dem Oberbegriff des Anspruchs 1. Eine solche Vorrichtung ist ausgebildet mit zumindest einem Bügelelement zur Aufnahme eines Rohres, einem Lastverteilungsblech zum Einlegen in das Bügelelement, und einer Befestigungseinrichtung zum Befestigen des Lastverteilungsblechs am Bügelelement, wobei die Befestigungseinrichtung zumindest ein Klinkenelement zum Umgreifen des Bügelelements sowie ein Gegenlagerelement aufweist, die in Längsrichtung des Lastverteilungsblechs versetzt am Lastverteilungsblech angeordnet sind, und zwischen denen ein Aufnahmeraum für das Bügelelement gebildet ist, und wobei das Bügelelement stirnseitig zumindest eine Ausnehmung aufweist, welche zum Einführen des Bügelelements in den Aufnahmeraum mit dem Klinkenelement korrespondiert.

Beispielsweise aus der US6138960A sind Leitungsabhängevorrichtungen zum Abhängen eines Rohres von einer Decke bekannt. Solche Leitungsabhängevorrichtungen weisen Bügelelemente auf, in denen das Rohr aufgenommen ist.

Um die Tragkraft von Leitungsabhängevorrichtungen über eine grössere Fläche in das Rohr oder eine das Rohr umgebene Isolierung einzuleiten, ist es beispielsweise aus der US3653618 bekannt, ein Lastverteilungsblech in das Bügelelement der Leitungsabhängevorrichtung einzulegen, auf dem wiederum das Rohr aufliegt. Ein gattungsgemässes Lastverteilungsblech vergrössert die Auflagefläche und verringert somit den auf das Rohr wirkenden Druck. Die US3653618 lehrt dabei, ein solches Lastverteilungsblech über eine Lasche zu zentrieren, die im Bügelelement verstemmbar ist.

Die US2010/140420A offenbart, ein Lastverteilungsblech über eine Presspassung zwischen zwei Versteifungsrippen zu fixieren. Aus der US6224025B geht ein System hervor, bei dem das Lastverteilungsblech einrastbar ist. Die US2004/0200936A1 beschreibt eine Leitungsabhängevorrichtung, bei der im Bügelelement ein Isolierelement angeordnet ist, welches das Rohr trägt. Dieses Isolierelement ist über zwei Nasen am Bügelelement gesichert, welche in korrespondierende Ausnehmungen im Bügelelement eingreifen.

Die US4017046 betrifft einen Stützsattel für Rohre, der Flanschelemente aufweist, die einen Schuh umgreifen.

Eine weitere Anordnung eines Lastverteilungsblechs ist in der nachveröffentlichten DE 10 2009 045484 beschrieben.

Die gattungsbildende US 6,959,898 B1 offenbart ein Haltesystem für Kabel, bei dem die Kabel in netzartige Elemente eingelegt sind, welche mittels Federclips an Leitungsabhängevorrichtungen befestigt sind.

Aufgabe der Erfindung ist es, eine Leitungsabhängevorrichtung anzugeben, die besonders einfach und zuverlässig zu installieren ist.

Die Aufgabe wird erfindungsgemäss durch eine Leitungsabhängevorrichtung mit den Merkmalen des Anspruchs 1 gelöst. Bevorzugte Ausführungsformen sind in den abhängigen Ansprüchen angegeben.

Eine erfindungsgemässe Leitungsabhängevorrichtung ist dadurch gekennzeichnet, dass das Lastverteilungsblech am Bügelelement durch eine Verdrehung des Lastverteilungsblechs relativ zum Bügelelement verriegelbar ist, bei der das Klinkenelement zu der Ausnehmung versetzt wird.

Bei einer gattungsbildenden Leitungsabhängevorrichtung ist vorgesehen, dass die Befestigungseinrichtung zumindest ein Klinkenelement zum Umgreifen des Bügelelements sowie ein Gegenlagerelement aufweist, die in Längsrichtung des Lastverteilungsblechs versetzt am Lastverteilungsblech angeordnet sind, und zwischen denen ein Aufnahmeraum für das Bügelelement gebildet ist, und dass das Bügelelement stirnseitig zumindest eine Ausnehmung aufweist, welche zum Einführen des Bügelelements in den Aufnahmeraum mit dem Klinkenelement korrespondiert.

Die Erfindung beruht auf einem Lastverteilungsblech, das auf dem Bügelelement der Leitungsabhängevorrichtung befestigt werden kann. Erfindungsgemäss wird diese Befestigung durch zumindest eine am Lastverteilungsblech angeordnete Verklinkung realisiert, welche in einer radial zum Bügelelement verlaufenden Bewegung in eine korrespondierende Ausnehmung im Bügelelement gesteckt werden kann, und welche durch eine zum Bügelelement tangentiale Verdrehung, ähnlich wie ein Bajonett-Verschluss, verriegelt werden.

Um ein unerwünschtes Herausdrehen des Lastverteilungsblechs um eine quer zur Längsachse des Lastverteilungsblechs verlaufende Achse zu vermeiden, ist längs versetzt (bezogen auf die Längsachse des Lastverteilungsblechs und des Bügelelements) zum Klinkenelement ein Gegenlagerelement vorgesehen. Bei eingelegtem Bügelelement ist das Klinkenelement auf der vorderen Stirnseite und das Gegenlagerelement auf der hinteren Stirnseite des Bügelelements angeordnet, d.h. Klinkenelement und Gegenlagerelement bilden einen Aufnahmeraum, in dem das Bügelelement im verriegelten Zustand aufgenommen ist. In diesem Aufnahmeraum ist das Bügelelement von oben durch das Lastverteilungsblech, von vorne und auch von unten durch das Klinkenelement und von hinten durch das Gegenlagerelement eingeschlossen. Dieser vierseitige Einschluss verhindert ein unerwünschtes Herausdrehen.

Das Klinkenelement kann aufgrund seiner Form mit einem ersten Schenkel, von dem ein zweiter, freier Schenkel winkelig absteht, auch als Hakenelement bezeichnet werden. Der freie Schenkel des Klinkenelementes ist erfindungsgemäss dem Gegenlagerelement zugewandt.

Das Lastverteilungsblech dient dazu, die vom Bügelelement auf ein eingelegtes Rohr ausgeübte Kraft flächenmässig zu verteilen. Es kann insbesondere einen zylindermantelsegmentförmigen Aufnahmeraum für das Rohr aufweisen. Das Bügelelement kann insbesondere ein Unterbügel sein. Das Klinkenelement und/oder das Gegenlagerelement sind erfindungsgemäss auf der Unterseite des Lastverteilungsblechs angeordnet, also auf der Seite des Lastverteilungsblechs, die dem Aufnahmeraum für das Rohr abgewandt ist.

Um ein Einführen des Bügelelements in den Aufnahmeraum bei verschiedenen Winkellagen zu gewährleisten, kann das Bügelelement stirnseitig auch mehrere Ausnehmungen aufweisen, welche zum Einführen des Bügelelements in den Aufnahmeraum mit dem Klinkenelement korrespondieren. Es können auch mehrere Klinkenelemente und/oder Gegenlagerelemente vorgesehen sein, wodurch ein noch besser definierter Verbund zwischen Bügelelement und Lastverteilungsblech erhalten werden kann.

Das Gegenlagerelement kann beispielsweise zum Aufnahmeraum hin eine ebene Anlagefläche aufweisen. Beispielsweise kann das Gegenlagerelement als Lasche ausgebildet sein, die von der Unterseite des Lastverteilungsblechs vorsteht. Besonders bevorzugt ist es jedoch, dass das Gegenlagerelement ein zweites Klinkenelement zum Umgreifen des Bügelelements ist, und dass das Bügelelement an seinen beiden gegenüberliegenden Stirnseiten jeweils zumindest eine Ausnehmung aufweist, wobei die beiden Ausnehmungen zum Einführen des Bügelelements in den Aufnahmeraum mit den beiden Klinkenelementen korrespondieren. Gemäss dieser Ausführungsform wird das Lastverteilungsblech an beiden Stirnseiten des Bügelelementes mit jeweils zumindest einem Klinkenelement am Bügelelement gehalten, so dass eine besonders zuverlässige Befestigung gegeben ist. Die beiden Klinkenelemente sind erfindungsgemäss in gegenüberliegende Richtungen geöffnet, so dass sich ihre freien Schenkel jeweils auf der Unterseite des Aufnahmeraums für das Bügelelement befinden. Zum Einstecken der beiden Klinkenelemente weist das Bügelelement entsprechend zwei stirnseitige Ausnehmungen auf.

Beispielsweise im Hinblick auf die Kräftesymmetrie ist es besonders vorteilhaft, dass das Klinkenelement und/oder das Gegenlagerelement in einem Scheitelbereich des Lastverteilungsblechs angeordnet sind. Unter dem Scheitelbereich kann insbesondere der Bereich verstanden werden, der umfangsmittig am zylindersegmentartigen Blech liegt. Durch die Anordnung am Scheitelbereich kann eine symmetrische Ausführung des Lastverteilungsbleches erhalten werden.

Weiterhin ist es bevorzugt, dass das Klinkenelement und das Gegenlagerelement auf einer in Längsrichtung des Lastverteilungsblechs verlaufenden Linie liegen. Gemäss dieser Ausführungsform liegen die beiden Elemente bei Blickrichtung von vorne, also bei Blickrichtung senkrecht zu den Stirnseiten des Lastverteilungsblechs und/oder Bügelelementes, hintereinander. Hierdurch weist die Befestigung einen besonders kompakten Aufnahmeraum auf, was einem Verkippen des Lastverteilungsblechs relativ zum Bügelelement entgegenwirkt. Als Längsachse, welche die Längsrichtung definiert, kann insbesondere eine Achse verstanden werden, die vom Bügelelement und/oder vom Blech umlaufen wird.

Eine insbesondere im Hinblick auf den Herstellungsaufwand vorteilhafte Weiterbildung der Erfindung liegt darin, dass das Klinkenelement und/oder das Gegenlagerelement einstückig mit dem Lastverteilungsblech ausgebildet sind. Sofern es sich bei dem Lastverteilungsblech um ein Metallblech handelt, können die Elemente durch Stanzbiegen hergestellt werden. Handelt es sich bei dem Lastverteilungsblech um ein Kunststoffmaterial, so können die Elemente beispielsweise im Rahmen eines Spritzgussprozesses ausgebildet werden.

Weiterhin ist es vorteilhaft, dass Bügelelement und das Lastverteilungsblech korrespondierende Zentrierungsmittel aufweisen. Beispielsweise kann am Lastverteilungsblech ein Zentriervorsprung und am Bügelelement eine korrespondierende Zentrierbohrung vorgesehen sein. Alternativ oder zusätzlich könnte auch am Bügelelement ein Zentriervorsprung und am Lastverteilungsblech eine korrespondierende Zentrierbohrung vorgesehen sein.

Die Erfindung wird nachfolgend anhand von bevorzugten Ausführungsbeispielen näher erläutert, die schematisch in den beiliegenden Figuren dargestellt sind. Es zeigen:
- Fig. 1: Eine erfindungsgemässe Leitungsabhängevorrichtung vor dem Einlegen des Lastverteilungsblechs in das Bügelelement;
- Fig. 2: eine Ansicht auf das Lastverteilungsblech aus Fig. 1 von unten;
- Fig. 3: eine Querschnittsansicht A-A das Lastverteilungsblechs aus Fig. 2;
- Fig. 4 bis 6: eine Sequenz beim Zusammenfügen der Leitungsabhängevorrichtung aus Fig.1 und anschliessendem Einlegen eines Rohres; und
- Fig. 7: eine weitere Ausführungsform einer erfindungsgemässen Leitungsabhängevorrichtung in einer Ansicht analog Fig. 3.

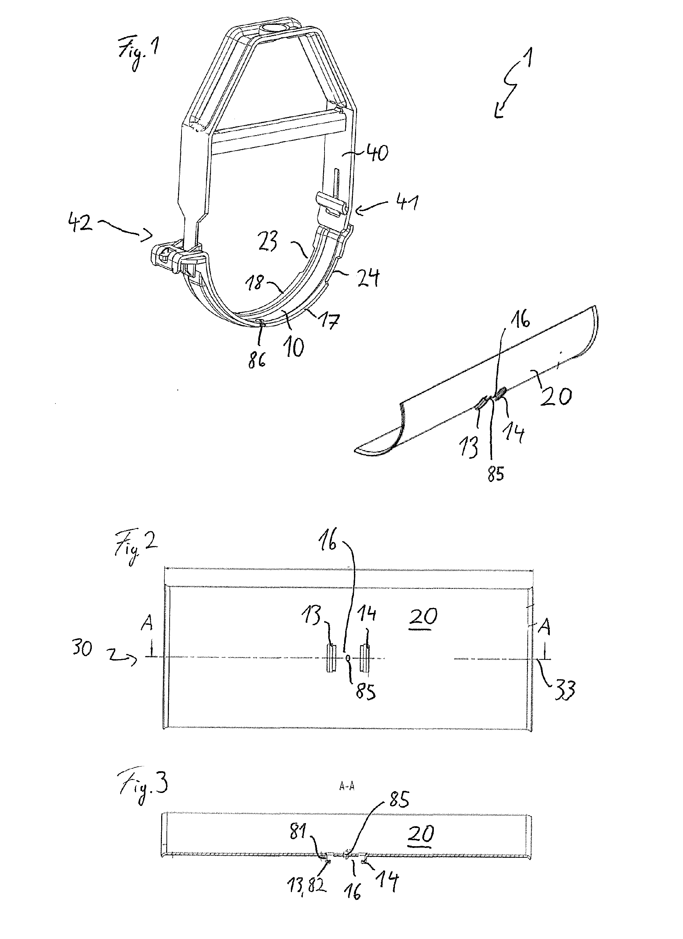

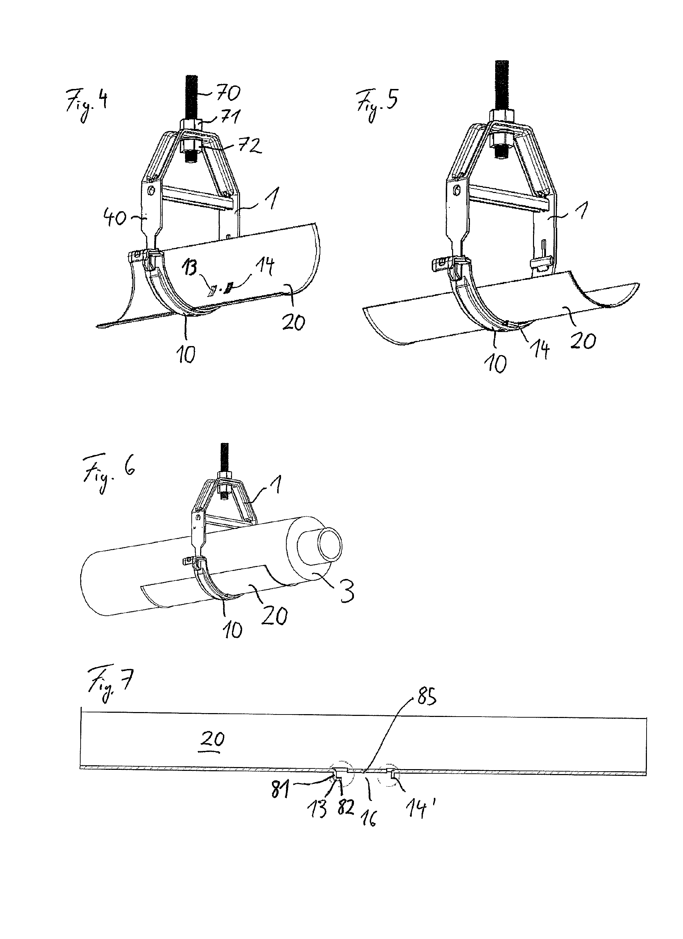

Ein Ausführungsbeispiel einer erfindungsgemässen Leitungsabhängevorrichtung 1 ist in den Figuren 1 bis 6 dargestellt. Die Leitungsabhängevorrichtung 1 weist ein erstes Bügelelement 10 auf, welches einen Unterbügel bildet, sowie ein zweites Bügelelement 40, welches einen Oberbügel bildet. Das erste Bügelelement 10 ist zum Einlegen eines Rohres 3 ausgebildet (vgl. Fig. 6), und weist eine dem Rohr 3 entsprechende zylindrische Innenkontur auf. Wie insbesondere Fig. 1 zeigt, ist das erste Bügelelement 10 ist mit dem zweiten Bügelelement 40 einerseits über ein Scharnier 41, z.B. ein Bolzenscharnier, und andererseits über eine Verschlusseinrichtung 42 verbunden.

Die Leitungsabhängevorrichtung 1 weist ferner ein Lastverteilungsblech 20 auf. Dieses Lastverteilungsblech 20 kann in das untere Bügelelement 10 eingelegt werden und weist eine zylindrische Aufnahme auf, in die wiederum das Rohr 3, insbesondere mit seiner Isolierung, eingelegt werden kann. Das Lastverteilungsblech 20 kann die Traglasten auf eine grössere Fläche verteilen als das Bügelelement 10 alleine. Durch Einbringen des Lastverteilungsblechs 20 zwischen unterem Bügelelement 10 und Rohr 3 können somit Beschädigungen des Rohres 3, z.B. ein Aufreissen seiner Isolation oder eine Einarbeitung der Leitungsabhängevorrichtung 1 in die Isolation, verhindert werden.

Die Leitungsabhängevorrichtung 1 kann, wie in Fig. 5 gezeigt, zum Beispiel auf dem Gebiet der Installationstechnik für die Einzelpunktbefestigung eines Rohres 3 für Heizung, Warmwasser, Frisch- und Abwasser etc. verwendet werden. Wie die Figuren 4 bis 6 zeigen, kann die Leitungsabhängevorrichtung 1 an einer Gewindestange 70 befestigt sein, die wiederum von einer Decke abgehangen sein kann. Die Befestigung der Leitungsabhängevorrichtung 1 an der Gewindestange 70 wird im gezeigten Beispiel über zwei Muttern 71, 72, die gekontert werden, vorgenommen, so dass das obere Bügelelement 40 der Leitungsabhängevorrichtung 1 mit der Gewindestange 70 fest fixiert ist.

Um das Lastverteilungsblech 20 am unteren Bügelelement 10 zu befestigen, weist das Lastverteilungsblech 20 an seiner unteren, dem Aufnahmeraum für das Rohr 3 abgewandten Seite ein Klinkenelement 13 sowie ein Gegenlagerelement 14 auf, das im vorliegenden Ausführungsbeispiel ebenfalls als Klinkenelement ausgebildet ist. Die beiden Elemente 13, und 14 umschliessen einen Aufnahmeraum 16 für das untere Bügelelement 10. Die beiden Elemente 13, 14 sind mittig am Lastverteilungsblech 20 in einem Scheitelbereich 30 des Lastverteilungsblechs 20 angeordnet, und stehen vom Lastverteilungsblech 20 nach unten ab. Wie insbesondere Fig. 3 zeigt, weisen die beiden Elemente 13 und 14 jeweils einen ersten Schenkel 81 auf, der vom Lastverteilungsblech 20, vorzugsweise senkrecht, absteht, sowie einen zweiten Schenkel 82, der sich winkelig an den ersten Schenkel 81 anschliesst, und der dem jeweils anderen Element 14 beziehungsweise 13 zugewandt ist.

Wie insbesondere Fig. 1 zeigt, weist das untere Bügelelement 10 an seinen gegenüberliegenden Stirnseiten 18 und 17 jeweils eine Ausnehmung 23 beziehungsweise 24 auf. Diese Ausnehmungen 23 und 24 korrespondieren mit den Elementen 13 beziehungsweise 14 des Lastverteilungsblechs 20. Die Ausnehmungen 23, 24 erlauben es, die beiden Elemente 13 und 14 des Lastverteilungsblechs 20 auf das Bügelelement 10 aufzustecken, obwohl das Bügelelement 10 an sich so breit ist, dass es von den Elementen 13 und 14 umgriffen wird.

Der Montagevorgang des Lastverteilungsblechs 20 am unteren Bügelelement 10 ist in den Figuren 4 bis 6 dargestellt. Zunächst wird, wie in Fig. 4 dargestellt, das Lastverteilungsblech 20 so angeordnet, dass die beiden Elemente 13 und 14 mit den Ausnehmungen 23 beziehungsweise 24 fluchten, und das Bügelelement 10 wird in den Aufnahmeraum 16 eingebracht. Sodann wird das Lastverteilungsblech 20, wie in Fig. 5 gezeigt, relativ zum Bügelelement 10 verdreht, und zwar um eine Drehachse, die parallel zu der in Fig. 2 gezeigten Längsachse 33 des Lastverteilungsblechs 20 verläuft. Dabei werden die Elemente 13 und 14 zu den Ausnehmungen 23 und 24 versetzt, was das Bügelelement 10 am Lastverteilungsblech 20 verriegelt. Wie Fig. 6 zeigt, kann sodann das mit einer Isolation versehene Rohr 3 auf das Lastverteilungsblech 20 aufgelegt werden.

Wie insbesondere Fig. 2 zeigt, sind die beiden Elemente 13 und 14 nebeneinander angeordnet, d.h. sie befinden sich auf einer parallel zur Längsachse 33 verlaufenden Linie. Während die beiden Elemente 13 und 14 mittig im Scheitelbereich 30 des Lastverteilungsblechs 20 angeordnet sind, sind die beiden korrespondierenden Ausnehmungen 23 bzw. 24 aussermittig und ausserhalb des Scheitelbereichs des unteren Bügelelements 10 am unteren Bügelelement 10 angeordnet. Dies hat zur Folge, dass das Lastverteilungsblech 20 dann verriegelt ist, wenn sich das Lastverteilungsblech 20 und das Bügelelement 10 in einer symmetrischen, mittigen Anordnung befinden.

Wie insbesondere die Figuren 1 und 2 zeigen, weist das untere Bügelelement 10 eine Zentrierbohrung 86 und das Lastverteilungsblech 20 einen korrespondierenden Zentriervorsprung 85 auf, wobei der Zentriervorsprung 85 im dargestellten Ausführungsbeispiel im Aufnahmeraum 16 angeordnet ist. Die Zentrierbohrung 86 und der korrespondierende Zentriervorsprung 85 dienen dazu, das Lastverteilungsblech 20 im verriegelten, symmetrischen Betriebszustand formschlüssig am Bügelelement 10 festzulegen, und ein unerwünschtes Verdrehen des Lastverteilungsblechs 20 relativ zum Bügelelement 10 zu verhindern. Zusätzlich oder alternativ kann ein Anschlag vorgesehen sein, um das Lastverteilungsblech 20 in mittlerer Lage des Bügelelementes 10 zu positionieren.

Ein weiteres Ausführungsbeispiel der Erfindung ist in Fig. 7 dargestellt. Das Ausführungsbeispiel der Fig. 7 unterscheidet sich vom Ausführungsbeispiel der Figuren 1 bis 6 dadurch, das gemäss Fig. 7 das Gegenlagerelement 14' nicht als Klinkenelement, sondern als gerade Lasche ausgebildet ist, die einen einfachen Anschlag bildet. Das Gegenlagerelement 14' ist nach unten offen und sichert das Bügelelement 10 unterseitig nicht. Demgegenüber sichert das Klinkenelement 13 das Bügelelement 10 auch nach unten, da es an seinem unteren Ende einen zweiten, abgewinkelten Schenkel 82 aufweist, der beim Gegenlagerelement 14' fehlt.

## Patentansprüche

1. Leitungsabhängevorrichtung (1) mit
zumindest einem Bügelelement (10) zur Aufnahme eines Rohres (3),
einem Lastverteilungsblech (20) zum Einlegen in das Bügelelement (10), und
einer Befestigungseinrichtung zum Befestigen des Lastverteilungsblechs (20) am Bügelelement (10),
wobei die Befestigungseinrichtung zumindest ein Klinkenelement (13) zum Umgreifen des Bügelelements (10) sowie ein Gegenlagerelement (14) aufweist, die in Längsrichtung des Lastverteilungsblechs (20) versetzt am Lastverteilungsblech (20) angeordnet sind, und zwischen denen ein Aufnahmeraum (16) für das Bügelelement (10) gebildet ist,
und wobei das Bügelelement (10) stirnseitig zumindest eine Ausnehmung (23) aufweist, welche zum Einführen des Bügelelements (10) in den Aufnahmeraum (16) mit dem Klinkenelement (13) korrespondiert,
**dadurch gekennzeichnet,**
**dass** das Lastverteilungsblech (20) am Bügelelement (10) durch eine Verdrehung des Lastverteilungsblechs (20) relativ zum Bügelelement (10) verriegelbar ist, bei der das Klinkenelement (13) zu der Ausnehmung (23) versetzt wird.

2. Leitungsabhängevorrichtung (1) nach Anspruch 1, **dadurch gekennzeichnet,**
**dass** das Gegenlagerelement (14) ein zweites Klinkenelement zum Umgreifen des Bügelelements (10) ist, und
**dass** das Bügelelement (10) an seinen beiden gegenüberliegenden Stirnseiten (18, 17) jeweils zumindest eine Ausnehmung (23, 24) aufweist, wobei die beiden Ausnehmungen (23, 34) zum Einführen des Bügelelements (10) in den Aufnahmeraum (16) mit den beiden Klinkenelementen (13, 14) korrespondieren.

3. Leitungsabhängevorrichtung (1) nach einem der vorstehenden Ansprüche, **dadurch gekennzeichnet,**
**dass** das Klinkenelement (13) und/oder das Gegenlagerelement (14) in einem Scheitelbereich (30) des Lastverteilungsblechs (20) angeordnet sind.

4. Leitungsabhängevorrichtung (1) nach einem der vorstehenden Ansprüche, **dadurch gekennzeichnet,**
**dass** das Klinkenelement (13) und das Gegenlagerelement (14) auf einer in Längsrichtung des Lastverteilungsblechs (20) verlaufenden Linie liegen.

5. Leitungsabhängevorrichtung (1) nach einem der vorstehenden Ansprüche, **dadurch gekennzeichnet,**
**dass** das Klinkenelement (13) und/oder das Gegenlagerelement (14) einstückig mit dem Lastverteilungsblech (20) ausgebildet sind.

6. Leitungsabhängevorrichtung (1) nach einem der vorstehenden Ansprüche, **dadurch gekennzeichnet,**
**dass** das Bügelelement (10) und das Lastverteilungsblech (20) korrespondierende Zentrierungsmittel (85, 86) aufweisen.

## Claims

1. Line hanging device (1), comprising
at least one stirrup element (10) for receiving a pipe (3),
a load distribution plate (20) for insertion into the stirrup element (10), and a fastening arrangement for fastening the load distribution plate (20) to the stirrup element (10),
wherein the fastening arrangement includes at least one catch element (13) for encompassing the stirrup element (10) and a brace element (14), which are arranged on the load distribution plate (20) offset to one another in the longitudinal direction of the load distribution plate (20) and between which a receiving space (16) for the stirrup element (10) is formed,
and wherein the stirrup element (10) has on its edge at least one recess (23) which corresponds to the catch element (13) to enable insertion of the stirrup element (10) into the receiving space (16),
**characterised in that**
the load distribution plate (20) is lockable to the stirrup element (10) by means of a rotation of the load distribution plate (20) relative to the stirrup element (10), in which rotation the catch element (13) is displaced with respect to the recess (23).

2. Line hanging device (1) according to Claim 1, **characterised in that** the brace element (14) is a second catch element for encompassing the stirrup element (10),
and **in that** the stirrup element (10) has at least one recess (23, 24) on each of its two opposite edges (18, 17), the two recesses (23, 24) corresponding to the two catch elements (13, 14) to enable insertion of the stirrup element (10) into the receiving space (16).

3. Line hanging device (1) according to either of the preceding claims, **characterised in that**
the catch element (13) and/or the brace element (14) is/are arranged in an apex region (30) of the load distribution plate (20).

4. Line hanging device (1) according to any one of the preceding claims, **characterised in that**
the catch element (13) and the brace element (14) lie on a line running in the longitudinal direction of the load distribution plate (20).

5. Line hanging device (1) according to any one of the preceding claims, **characterised in that**
the catch element (13) and/or the brace element (14) is/are formed integrally with the load distribution plate (20).

6. Line hanging device (1) according to any one of the preceding claims, **characterised in that**
the stirrup element (10) and the load distribution plate (20) have corresponding centring means (85, 86).

## Revendications

1. Dispositif de suspension de conduite (1) comportant :
au moins un étrier (10) pour recevoir un tuyau (3),
une plaque de répartition de charge (20) pour être placée dans l'étrier(10), et
un dispositif de fixation pour fixer la plaque de répartition de charge (20) sur l'étrier(10),
dans lequel le dispositif de fixation comporte au moins un élément d'encliquetage (13) pour venir en prise autour de l'étrier(10), ainsi qu'un élément de support complémentaire (14), qui sont agencés dans une direction longitudinale de la plaque de répartition de charge (20) de manière décalée sur la plaque de répartition de charge (20), et entre lesquels un espace de réception (16) est formé pour l'étrier (10),
et dans lequel l'étrier (10) comporte, sur la face avant, au moins un évidement (23) qui correspond à l'élément d'encliquetage (13) pour l'introduction de l'étrier (10) dans l'espace de réception (16),
**caractérisé en ce que** la plaque de répartition de charge (20) peut être bloquée sur l'étrier (10) par une rotation de la plaque de répartition de charge (20) relativement à l'étrier (10), lors de laquelle l'élément d'encliquetage (13) est décalé par rapport à l'évidement (23).

2. Dispositif de suspension de conduite (1) selon la revendication 1, **caractérisé en ce que** l'élément de support complémentaire (14) est un second élément d'encliquetage pour venir en prise autour de l'étrier (10), et
**en ce que** l'étrier (10) comporte, sur ses deux faces avant opposées (18, 17), respectivement au moins un évidement (23, 24), dans lequel les deux évidements (23, 24) correspondent aux deux éléments d'encliquetage (13, 14) pour l'introduction de l'étrier (10) dans l'espace de réception (16).

3. Dispositif de suspension de conduite (1) selon l'une des revendications précédentes, **caractérisé en ce que** l'élément d'encliquetage (13) et/ou l'élément de support complémentaire (14) sont agencés dans une zone supérieure (30) de la plaque de répartition de charge (20).

4. Dispositif de suspension de conduite (1) selon l'une des revendications précédentes, **caractérisé en ce que** l'élément d'encliquetage (13) et l'élément de support complémentaire (14) sont situés sur une ligne s'étendant dans la direction longitudinale de la plaque de répartition de charge (20).

5. Dispositif de suspension de conduite (1) selon l'une des revendications précédentes, **caractérisé en ce que** l'élément d'encliquetage (13) et/ou l'élément de support complémentaire (14) sont formés d'une seule pièce avec la plaque de répartition de charge (20).

6. Dispositif de suspension de conduite (1) selon l'une des revendications précédentes, **caractérisé en ce que** l'étrier (10) et la plaque de répartition de charge (20) comportent des moyens de centrage (85, 86) correspondants.
